# EUROPÄISCHE PATENTSCHRIFT

(11) **EP 1 600 805 B1**
(45) Veröffentlichungstag und Bekanntmachung des Hinweises auf die Patenterteilung: **03.10.2007**
(21) Anmeldenummer: 05010800.0
(22) Anmeldetag: 18.05.2005
(51) Int. Cl.: G02C 7/04, A01K 13/00

(54) **Vorrichtung zum Schutz der Augen eines Tieres gegen UV-Strahlung**
Animal eye protection device against UV-rays
Dispositif de protection oculaire d'un animal contre les rayonnements UV

(30) Priorität: 25.05.2004 DE 202004008321 U
(43) Veröffentlichungstag der Anmeldung: 30.11.2005
(73) Patentinhaber: *Acri.Tec AG Gesellschaft für ophthalmologische Produkte, 16761 Hennigsdorf (DE)
(72) Erfinder: Fromberg, Ingeborg, D-16567 Schönfliess (DE); Kreiner, Christine, Dr., D-81545 München (DE)
(74) Vertreter: Eisenführ, Speiser & Partner

(56) Entgegenhaltungen:
- EP-A- 1 243 960
- US-A- 4 581 877
- US-A1- 2003 233 988

## Beschreibung

Die Erfindung betrifft eine Vorrichtung zum Schutz der Augen eines Tieres, insbesondere Hundes, gegen UV-Strahlung.

Bei Hunden mit entsprechender Rassedisposition besteht bei Sonneneinstrahlung die Gefahr, dass die Augen der Tiere an Keratitis superficialis chronica erkranken. Es handelt es sich hier um eine chronisch oberflächlich proliferierende Keratitis, die durch den Einfluss von UV-Strahlung aktiviert wird. Hiervon betroffen sind insbesondere Hunde, wie Schäferhunde und DSH-Mischlinge, welche in Gebirgsgegenden als Suchhunde, insbesondere Lawinenhunde zum Einsatz kommen. Bei dieser Krankheit treten leichte, oberflächliche Hornhautödeme auf, die bis zur Vaskularisierung und Pigmentation der Hornhaut und somit zur Einschränkung der Sehfähigkeit führen können.

Aus US 2003/233 988 A1, von welcher im Oberbegriff des Patentanspruches 1 ausgegangen wird, ist es bekannt, die Augen der Tiere durch Schneebrillen, welche am Kopf des Tieres fixiert werden, zu schützen. Viele Hunde tolerieren solche Brillen nicht. Der Einsatz der Hunde, insbesondere als Suchhunde, wird dadurch stark behindert. Zudem besteht die Gefahr des Verrutschens der Brillen.

Aus EP-A-1 243 960 sind weiche Kontaktlinsen bekannt, welche zur Sehkorrektur fehlsichtiger Augen auf die Augenhornhaut aufgesetzt werden. Derartige Linsen besitzen zur Sehkorrektur Brechkraftwerte und im Linsenmaterial kann ein UV-Blocker eingelagert sein.

Aufgabe der Erfindung ist es daher, eine Vorrichtung der eingangs genannten Art zu schaffen, bei der ein sicherer Schutz des Tierauges gegen UV-Strahlung erreicht wird.

Diese Aufgabe wird erfindungsgemäß durch eine jeweils auf die Augenhornhaut des Tierauges aufsetzbare Linse, deren Linsenmaterial einen UV-Absorber enthält, gelöst. Bei diesen Schutzlinsen handelt es sich um Linsen, deren Brechkraft 0 Dioptrien beträgt und welche als Bandage-Linsen (Verbandslinsen) ausgebildet sind, deren Linsendurchmesser und Basiskurve an das jeweilige Tierauge angepasst sind, gemäß dem kennzeichnenden Teil des Patentanspruchs 1. Ein geeignetes Linsenmaterial ist ein weiches, beispielsweise aus einem Hydrogel bestehendes Material mit relativ hoher Wasseraufnahme von mehr als 40%, insbesondere 70% bis 75%. Ein bevorzugtes Linsenmaterial ist Hydroxyethylmethacrylat-Vinylpyrrolidon. Es handelt sich hier um eine weiche Linse mit einem Wassergehalt von 72,5 %. Die Linse hat eine Sauerstoffpermeabilitätskonstante (35°C) von 32. Geeignete UV-Absorber sind in bekannter Weise Derivate des Benzophenons, dessen Substituenten, wie Hydroxy- und/oder Alkoxy-Gruppen sich meist in 2- und/oder 4-Stellung befinden. Auch Cyanacrylsäureester-Derivate sind geeignet. Ferner sind auch substituierte Benzotriazole, beispielsweise Methacryloxy-Benzotriazol-Derivate geeignet. Der UV-Absorber ist vollständig in die Matrix des Linsenmaterials eingebaut.

Ein jeweils aus zwei Schutzlinsen bestehendes Set bildet die UV-Schutzvorrichtung für die beiden Augen des Tieres.

In der folgenden Tabelle werden für unterschiedliche Tiere Durchmesser und Basiskurven der UV-Schutzlinsen angegeben.

| Durchmesser | Basiskurve | Tierarten |
|---|---|---|
| 18,0 mm | 9,6 mm | mittelgroße Hunde - etwas kleiner; die meisten Hundezüchtungen wie Collies, Huskies, Corgis, einige Boxer |
| 18,0 mm | 9,8 mm | mittelgroße Hunde - etwas größer; die meisten Hundezüchtungen wie Labradors, Retriever, Boxer |
| 20,0 mm | 10,4 mm | Hunde - große Augen; einige Bulldoggen; einige Boxer |
| 22,0 mm | 11,4 mm | Hunde - sehr große Augen |
| 22,0 mm | 11,8 mm | Hunde - nur sehr große Augen |
| 20,0 mm | 11,2 mm | Hunde - Zwischengröße |
| 20,0 mm | 10,8 mm | Hunde - Zwischengröße |
| 18,0 mm | 10,0 mm | Hunde - Zwischengröße |

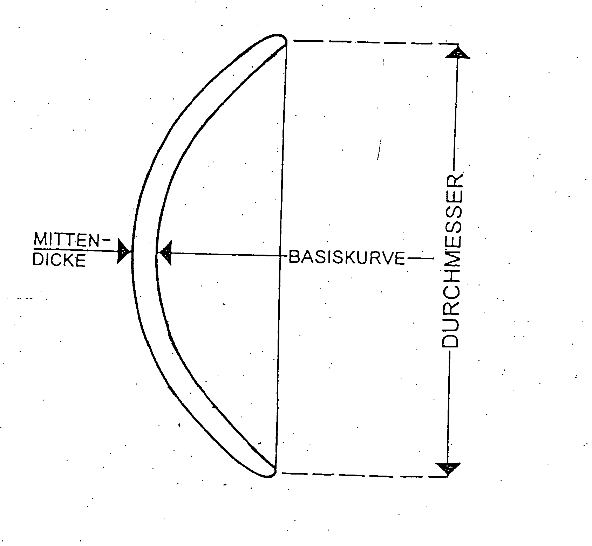

Aus der beigefügten Figur ist in schnittbildlicher Darstellung ein Ausführungsbeispiel für eine Schutzlinse dargestellt. Die Schutzlinse bewirkt keine optische Korrektur und hat daher 0 Dioptrien. Die Mittendicke der Schutzlinse beträgt vorzugsweise 0,8 mm. Bei den für die Basiskurve angegebenen Werten handelt.es sich um die Krümmungsradien der Innenkurve, insbesondere im zentralen Teil der Linse. Beim Durchmesser handelt es sich um den Gesamtdurchmesser des Linsenkörpers, wie aus der Figur zu ersehen ist.

## Patentansprüche

1. Vorrichtung zum Schutz der Augen eines Tieres, insbesondere Hundes, gegen UV-Strahlung mit auf die Tieraugen jeweils aufsetzbaren Schutzlinsen, deren Linsenmaterial einen UV-Absorber aufweist, **dadurch gekennzeichnet, dass** die jeweilige Schutzlinse als auf die Augenhornhaut aufzusetzende Bandage-Linse, d.h. Verbandslinse, mit einer Brechkraft von 0 Dioptrien sowie mit an das jeweilige Tierauge angepasstem Linsendurchmesser und mit angepasster Basiskurve ausgebildet ist.

2. Vorrichtung nach Anspruch 1, **dadurch gekennzeichnet, dass** die Schutzlinse aus einem weichen Linsenmaterial mit einer Wasseraufnahme von ca. 70 bis 75 % besteht.

3. Vorrichtung nach Anspruch 1 oder 2, **dadurch gekennzeichnet, dass** das Linsenmaterial aus Hydroxyethylmethacrylat-Vinylpyrrolidon besteht.

4. Vorrichtung nach einem der Ansprüche 1 bis 3, **dadurch gekennzeichnet, dass** die Schutzlinsen für Hundeaugen Linsendurchmesser von 18,0 mm bis 22,0 mm und Basiskurven von 9,6 mm bis 11,8 mm aufweisen.

## Claims

1. A device for protecting the eye of an animal, in particular a dog, from UV radiation, comprising protective lenses which can be respectively fitted on to the eyes of the animal and the lens material of which has an UV absorber, **characterised in that** the respective protective lens is in the form of a bandage lens, that is to say a dressing lens, which is to be fitted on to the cornea of the eye, with a refractive power of 0 dioptres and with a lens diameter adapted to the respective eye of the animal and with an adapted base curve.

2. A device according to claim 1 **characterised in that** the protective lens comprises a soft lens material with a water absorption capability of about 70 to 75%.

3. A device according to claim 1 or claim 2 **characterised in that** the lens material comprises hydroxyethylmethacrylate vinylpyrrolidone.

4. A device according to one of claims 1 to 3 **characterised in that** the protective lenses for the eyes of dogs are of lens diameters of 18.0 mm to 22.0 mm and have base curves of 0.6 mm to 11.8 mm.

## Revendications

1. Dispositif de protection oculaire d'un animal, en particulier d'un chien, contre les rayonnements UV, comprenant des lentilles de protection qui peuvent être respectivement mises en place sur les yeux de l'animal, **caractérisé en ce que** la lentille de protection respective est réalisée sous forme de lentille de bandage, c'est-à-dire de lentille de pansement, à poser sur la cornée, avec un pouvoir réfringent de 0 dioptrie, ainsi qu'avec un diamètre de lentille adapté à l'oeil respectif de l'animal et une courbe de base adaptée.

2. Dispositif suivant la revendication 1, **caractérisé en ce que** la lentille de protection se compose d'une matière souple avec une absorption d'eau d'environ 70 à 75%.

3. Dispositif suivant l'une des revendications 1 et 2, **caractérisé en ce que** la matière de la lentille se compose d'hydroxyéthylméthacrylate - vinylpyrrolidone.

4. Dispositif suivant l'une des revendications 1 à 3, **caractérisé en ce que** les lentilles de protection pour yeux de chiens présentent des diamètres de 18,0 mm à 22,0 mm et des courbes de base de 9,6 mm à 11,8 mm.
